# EUROPEAN PATENT SPECIFICATION

(11) **EP 3 507 574 B1**
(45) Date of publication and mention of the grant of the patent: **20.10.2021**
(21) Application number: 17771614.9
(22) Date of filing: 24.08.2017
(51) Int. Cl.: G06Q 30/06

(54) **SCALE-BASED CUSTOMER QUEUING SYSTEM**
SKALENBASIERTES KUNDENWARTESCHLANGENSYSTEM
SYSTÈME DE MISE EN FILE D'ATTENTE DE CLIENTS BASÉ SUR BALANCES

(30) Priority: 31.08.2016 US 201662381747 P
(43) Date of publication of application: 10.07.2019
(73) Proprietor: Illinois Tool Works Inc., Glenview, IL 60025 (US)
(72) Inventor: DAVIS, Robert, S., Glenview, IL 60025 (US); BLANKLEY, Randy, L., Jr., Glenview, IL 60025 (US); JACKSON, David, K., Glenview, IL 60025 (US); SWIFT, Aaron, T., Glenview, IL 60025 (US); DAVIS, Ian, C., Glenview, IL 60025 (US)
(74) Representative: Trinks, Ole
(86) International application number: PCT/US2017/048323
(87) International publication number: WO 2018/044666

(56) References cited:
- WO-A1-2004/061783
- GB-A- 2 300 509

## Description

### CROSS-REFERENCES

The present application claims the benefit of U.S. Application Serial No. 62/381,747, filed August 31, 2016.

### TECHNICAL FIELD

This application relates generally to scales used for weighing food products in supermarkets, groceries and other stores, and, more particularly, to a scale-based customer queuing system.

### BACKGROUND

In typical commercial food product scale applications the scale is used to weigh food products and determines prices for the food products, and an associated printer prints a label for application to the food product. An operator enters a product number, such as a PLU (price look-up) number, for the product being weighed and the scale accesses its database, or accesses a remote database, for pricing information on the product. The total price for the item is then determined based upon its weight.

In a typical supermarket or grocer, multiple scales are often placed in a given perishables department (e.g., deli, meat, fish, bakery and/or prepared foods departments) to enable service of multiple customers at any given time by multiple store department personnel. Typical stores including a ticket dispenser that dispenses to customers a ticket with a number, and a customer number display is located in the department to enable personnel to attempt to sequentially serve customers in order. The customer number display is typically a simple display that is manually sequenced by personnel by a simple button press. More sophisticated queuing systems have been attempted, but often require purchase of separate systems.

Documents WO2004061783 and GB2300509 disclose scale systems including a device which provides each customer with a queue number.

It would be desirable to provide a weighing and pricing scale which may be easily used for self service systems without any staff assisting a customer.

### SUMMARY

According to the invention, a weighing and pricing scale according to claim 1 and a method of carrying out a scale-based customer queuing system according to claim 13 is disclosed.

In one aspect, in a scale-based queuing system the scales in a perishables department of a store efficiently queue customers in the department. The system utilizes a kiosk system to dispense a printed ticket for the next customer in line to be serviced. The customers are serviced by each scale that is online in the department by load balancing the users across all of the department scales with operators.

According to the invention, a weighing and pricing scale is adapted to enable a customer queuing system, and includes a weigh station for receiving items to be weighed, an operator interface for displaying information associated with scale operations, a customer facing interface for displaying information to customers and a controller operatively coupled to the operator interface to effect display of information thereon and to the customer interface to effect display of information thereon. The controller is configured with an enablable customer queuing mode, where the enablable customer queuing mode includes both a master queuing sub-mode and slave queuing sub-mode and the master queuing sub-mode and the slave queuing sub-mode are mutually exclusive.

In a further aspect, a scale-based customer queuing system includes a ticket dispense machine with an associated controller, and a plurality of scales within a store department. Each of the scales includes a weigh station for receiving items to be weighed, an operator interface configured to display information associated with scale operations, a customer facing interface for displaying information to customers and a controller operatively coupled to the operator interface to effect display of information thereon and to the customer interface to effect display of information thereon. The controller of a first scale of the plurality of scales is configured to operate the first scale as a master queuing scale that communicates with both the ticket dispense machine and the remaining scales of the plurality of scales to carry out a customer queueing system.

In yet another aspect, a method of carrying out a scale-based customer queuing system in a perishable food department of a store is also provided, where the department includes a plurality of scales within the perishable food department. The method involves configuring one scale of the plurality of scales as a master queuing scale and configuring remaining scales of the plurality of scales as slave queuing scales. The master queuing scale operates to maintain a running list of queue numbers provided to customers and assign queue numbers from the running list to itself and the slave queuing scales according to queue number requests in a mutually exclusive manner such that, at any given time, the master queuing scale and the slave queuing scales each have an assigned queue number that is different than that of an of the other scales. Each of the master queuing scale and the slave queuing scales operate to display its respective assigned queue number on its customer interface.

The details of one or more embodiments are set forth in the accompanying drawings and the description below. Other features, objects, and advantages will be apparent from the description and drawings, and from the claims.

### BRIEF DESCRIPTION OF THE DRAWINGS

Fig. 1 is a front perspective view of one embodiment of a scale;
Fig. 2 shows a customer facing scale view;
Fig. 3 shows an exemplary scale system within a store;
Fig. 4 shows a basic scale control diagram; and
Fig. 5 shows a customer queueing system including multiple scales.

### DETAILED DESCRIPTION

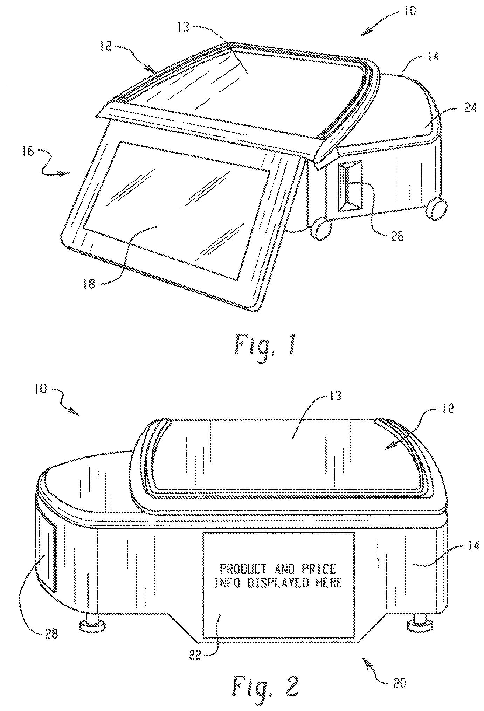

Referring to Figs. 1 and 2, an exemplary scale configuration is shown. The scale 10 includes a weighing station 12, which in some embodiments may be formed by a weighing platter 13 that can be removed (e.g., for cleaning) from atop the scale housing 14, and having an associated mechanism such as a load cell located internal of the scale housing 14, for producing weight indicative signals when items are placed on the weighing station. An operator interface side 16 of the scale includes an operator interface 18 configured to display information associated with scale operations. By way of example, the operator interface 18 may be formed by a touch-screen display. A customer interface side 20 of the scale includes a customer interface 22, which in certain embodiments may be formed by any suitable display screen technology. It is contemplated that the customer interface 22 need not include touch-screen capabilities, but it is recognized that in certain embodiments touch-screen capability could be incorporated into the customer interface as well. A side portion 24 of the scale housing includes a label exit slot 26 and incorporates a label printer therein along with a label supply station. The label printer may use any suitable printing technology. A removable side panel 28 is provided to access the label supply station for replacement of the labels and to access the label printer and the label path for maintenance etc. Alternatively, member 28 may take the form of a removable cassette.

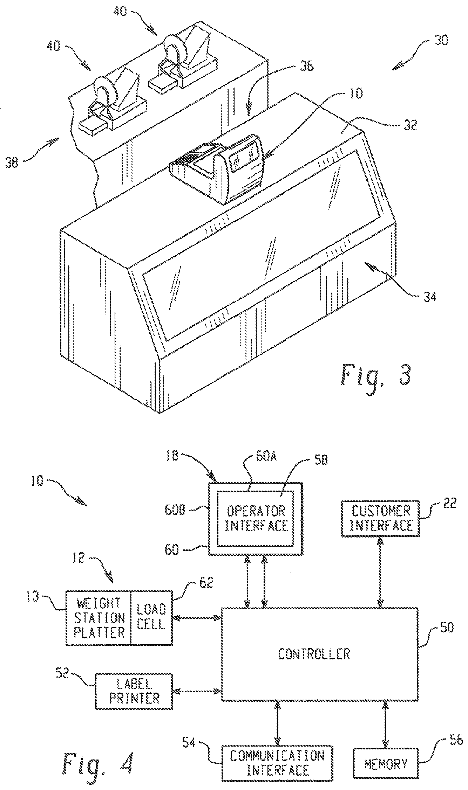

Referring to FIG. 3, an exemplary scale system 30 is shown (e.g., located in a store perishables department such as a deli department, meat and fish department or baked goods department) having a counter 32 with a customer side 34 and a service person side 36. The scale system includes a scale 10 located atop the counter 32 and adapted for weighing and pricing food items. In the illustrated embodiment a single scale 10 is shown, but many departments will include multiple scales. Likewise, while a single counter is shown, many departments will include multiple counters arranged adjacent each other to effectively form one continuous counter. In an alternative embodiment, the scale may be a hanging scale located above the counter 32. As shown, in certain embodiments the scale counter may be located in front of a food preparation or packaging area such as a meat slicing station 38 that includes one or more food product slicers 40.

In one example of a typical item pricing operation an operator enters an item identifier (e.g., a price look-up number or PLU) via the operator interface, and the scale retrieves price and other product information associated with the PLU and displays product information. The operator places the item (e.g., just sliced by the operator or selected from a container within the deli counter or elsewhere, or in the case of self service selected from a food display or stand) on the weighing station, and the scale prices the item based upon weight and displays that price on both the operator interface and the customer interface. When the desired amount of the product is achieved, the operator presses a print button on the operator interface and the scale prints a label with item details (e.g., item name, item weight, item price) that is then applied to a package in which the item is placed before the package is handed to a customer. In another example, which is more common in a bakery department, the scale 10 may price an item by an item count entered by the operator (e.g., in the case of an item with a PLU that indicates a price based upon item count).

Referring now to Fig. 4, a high level schematic depiction of the scale 10 is shown, including a controller 50 interconnected with each of the operator interface 18, customer interface 22, weighing station 12, label printer 52 and a communications interface 54, and having associated memory 56. The controller 50 may, for example, be any suitable processor-based controller, including one or more processors, such as a dual-core processor, with associated hardware, software and firmware to achieve desired functionality. As used herein, the term controller is intended to broadly encompass any circuit (e.g., solid state, application specific integrated circuit (ASIC), an electronic circuit, a combinational logic circuit, a field programmable gate array (FPGA)), processor(s) (e.g., shared, dedicated, or group - including hardware or software that executes code), software, firmware and/or other components, or a combination of some or all of the above, that carries out the control and/or processing functions of the scale or the control and/or processing functions of any component thereof. The operator interface 18 may include both a display device 58 and touch-screen panel 60 as shown. The weight station platter 13 is operatively connected to a load cell 62, which produces weight indicative signals. The communication interface 54 may be any suitable type (e.g., as a hardware link, such as a standard network connector, or may be formed by a wireless device such as an RF or infrared transceiver), and it is recognized that multiple communications interfaces may be provided. Memory 56 may, by way of example, take the form of one or more of nonvolatile flash memory and/or random access memory, or disk on module or micro-SD. As explained above, the controller 50 is operable to establish a price for a weighed item based in part upon a weight indicative signal produced for that item. In this regard, the scale controller may include its own database of product price information (e.g., price per pound) that it retrieves when the operator inputs the PLU number or other product identifier of an item being weighed. Alternatively, in certain embodiments, the controller may utilize the communication interface 54 to access a remote computer system having the database of product price information on other product information. Although not shown in Fig. 4, in certain embodiments the scale may also include an RF operator identification system in which operators utilize RF identification units (e.g., in the form of wrist-band type units, or other structures) that are worn proximate to the hands of the operator. Such a system is described in U.S. Patent No. 7,041,915.

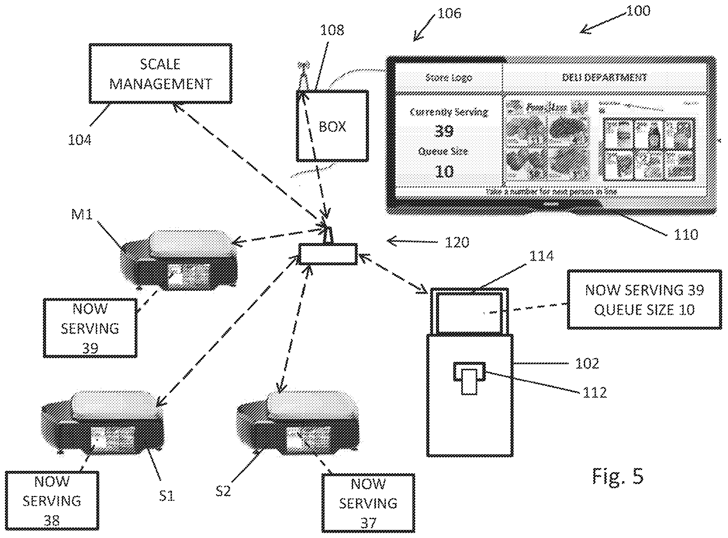

Referring now to Fig. 5, an exemplary implementation of a scale-based queuing system 100 is shown. The system enables scales to efficiently queue customers in a store department. The system 100 includes a ticket dispense machine 102 (e.g., in the form of a kiosk) to dispense printed tickets for customers, where each printed ticket includes a queue number. The system also includes a plurality of scales (e.g., three illustrated, but the number could be less or more). The controller of each scale is configured with an enablable customer queuing mode so that the inclusion or non-inclusion of the scale in the queueing system 100 is selectable. In this regard, a store computer 104 (e.g., desktop, mobile or other) includes scale management software that enables store personnel to access and configure each scale (e.g., enable or disable the customer queuing mode of each scale). In this regard, the enablable customer queuing mode of each scale includes both a master queuing sub-mode and slave queuing sub-mode, and the master queuing sub-mode and the slave queuing sub-mode are mutually exclusive. Here, scale M1 is configured with its queuing mode and master queuing sub-modes enabled, and scales S1 and S2 are configured with queuing mode and slave queuing sub-modes enabled. Also included in the illustrated system 100 is a stand-alone display device 106 (e.g., hanging on a wall of the store department or mounted on a stand) that includes a digital set top box 108 and digital display screen 110. Here, the ticket dispense machine 102 includes a ticket dispenser 112, internal printer (not shown) to print numbers on the tickets for dispense and a display screen 114. The ticket dispense machine 102 may typically be placed anywhere in the customer entry or waiting area or the store department. All devices are connected in a store communications network 120 (e.g., any suitable wireless, wired or combination network), and each device has an associated address on the network 120 (e.g., an IP address).

As mentioned above, the store computer 104 is used to configure the queuing system 100 via the scale management application. When scale M1 is configured as the master queuing scale, scale M1 is informed of the IP address of each other scale (e.g., S1 and S2) that is on the network and that will participate in the queuing system, the IP address of the ticket dispense machine 102 and whether and what queue data to send to the ticket dispense machine for display, and the IP address of the digital display device 106 and what queue data to send to the display device for display. Scale M1 will therefore operate to communicate with each of the devices to carry out the queuing process (as will be described in more detail below). When scales S1 and S2 are configured as slave queuing scales, the scales S1 and S2 are informed of the IP address of the master queuing scale M1. The store computer 104 and scale management application is also used to configure the ticket dispense machine 102 and the digital display device for operation in the system (e.g., by informing both machine 102 and device 106 of the IP address of the master scale M1 and defining what information will be displayed by machine 102 and device 106).

Generally, the master queuing scale M1 is configured to send queue numbers to the ticket dispense machine 102 for dispensing and send queue numbers to each of the slave queueing scales S1 and S2 for display on the customer interface of such scales. In this regard, scale M1 operates to maintain a running list of queue numbers dispensed by the ticket dispense machine. In this regard, the ticket dispense machine 102 may send queue number requests to scale M1 (e.g., each time a ticket is pulled from the ticket machine the machine controller sends a request to scale M1 for the next number, which also informs scale M1 that the prior number has been dispensed). Each time a queue number is dispensed by the machine 102, the controller of scale M1 adds the dispensed queue number to the sequential, running list. If the machine 102 is configured to display queue data, scale M1 also operates to send the queue data to machine 102. For example, the queue data sent for display may include the highest queue number assigned to any scale (e.g., 39 in Fig. 5) and the total size of the queue (e.g., based upon the queue numbers that are assigned to the scales (e.g., three queue numbers in Fig. 5) and those remaining on the running list that have yet to be assigned (e.g., in this case seven queue numbers, for a total queue size of 10 in Fig. 5).

Scale M1 also operates to assign queue numbers from the running list among the scales in a mutually exclusive manner such that, at any given time, each scale has an assigned queue number that is different than that of any of the other scales (e.g., scale S2 displaying queue number 37, scale S2 displaying queue number 38 and scale M1 displaying queue number 39 per Fig. 5). The slave queuing scales S1 and S2 send queue number requests to scale M1 (e.g., when the scale operator presses a displayed "Next Customer In Queue" or similar button displayed on the operator interface when the operator is finished with one customer and ready to move onto the next). The queue number assigned to the slave queueing scale (received from master queueing scale M1) is then displayed on the customer interface for customers to see (and typically also displayed on the operator interface so that the operator can vocally seek the customer with the ticketed queue number). Scale M1 similarly assigns itself a queue number, and updates its own assigned queue number, when an operator of scale M1 presses a displayed "Next Customer In Queue" or similar button displayed on its own operator interface.

Scale M1 also operates to send queue data to display device 106 for display. For example, the queue data sent for display may include the highest queue number assigned to any scale (e.g., 39 in Fig. 5) and the total size of the queue (e.g., based upon the queue numbers that are assigned to the scales (e.g., three queue numbers in Fig. 5) and those remaining on the running list that have yet to be assigned (e.g., in this case seven queue numbers, for a total queue size of 10 in Fig. 5). The display device 106 may simultaneously display other information as well, such as product data, advertisements or other messages. Scale M1 operates to update the queue data sent to display device 106 as changes are needed. In some case, the queue data sent to display device 106 for display may also include an expected wait time for the queue (e.g., calculated by scale M1 based upon a known, running average weight time for customers in the queue and the queue size).

Thus, a method of carrying out a scale-based customer queuing system in a perishable food department of a store is also provided, where the department includes a plurality of scales within the perishable food department. The method involves configuring one scale of the plurality of scales as a master queuing scale (e.g., M1) and configuring remaining scales of the plurality of scales as slave queuing scales (e.g., S1 and S2). The master queuing scale operates to maintain a running list of queue numbers provided to customers and assign queue numbers from the running list to itself and the slave queuing scales according to queue number requests in a mutually exclusive manner such that, at any given time, the master queuing scale and the slave queuing scales each have an assigned queue number that is different than that of an of the other scales. Each of the master queuing scale and the slave queuing scales operate to display its respective assigned queue number on its customer interface. The master queuing scale also operates to provide queue numbers to a ticket dispense machine (e.g., 102) and, upon dispense by the ticket dispense machine of a ticket with a given queue number, to add the given queue number to the running list. The master queuing scale also operates to provide queue data to a stand-alone display device (e.g., 106) in the perishable food department, wherein the queue data includes a highest queue number assigned to one of the scales and a queue size, and the stand-alone display device displays both the highest queue number and the queue size.

## Claims

1. A weighing and pricing scale (10) adapted to enable a customer queuing system (100), comprising:
- a weigh station (12) for receiving items to be weighed, an operator interface (18) for displaying information associated with scale operations, a customer facing interface (22) for displaying information to customers and a controller (50) operatively coupled to the operator interface (18) to effect display of information thereon and to the customer interface (22) to effect display of information thereon,
**characterized in that**
the controller (50) is configured with an enablable customer queuing mode, where the enablable customer queuing mode includes both a master queuing sub-mode and slave queuing sub-mode and the master queuing sub-mode and the slave queuing sub-mode are mutually exclusive,
wherein:
- in the master queuing sub-mode the controller (50) operates to (i) maintain a running list of queue numbers that have been provided to customers, (ii) assign queue numbers from the running list to one or more devices upon receipt of a queue number request from each of the one or more devices and (iii) assign queue numbers from the running list to itself according to queue number requests made via the operator interface (18) and effect display of its currently assigned queue number on the customer interface (22);
- in the slave queuing sub-mode the controller (50) operates to request queue numbers from another device and display its currently assigned queue number on the customer interface (22).

2. A scale-based customer queuing system (100), comprising:
- a ticket dispense machine (102) with an associated controller;
- a plurality of scales (10) as defined in claim 1 within a store department,
wherein the controller (50) of a first scale (10) of the plurality of scales (10) is configured to operate the first scale (10) as a master queuing scale (M1) that communicates with both the ticket dispense machine (102) and the remaining scales (10) of the plurality of scales (10) to carry out a customer queuing system (100).

3. The system (100) of claim 2,
wherein:
- each of the scales (10) and the ticket dispense machine (102) are connected to a store communications network and the first scale (10, M1) communicates with the remaining scales (10) and the ticket dispense machine (102) over the store communications network.

4. The system (100) of claim 2 or 3,
wherein:
- the controller (50) of the first scale (10, M1) is configured to (i) send queue numbers to the ticket dispense machine (102) for dispensing and (ii) send queue numbers to each of the remaining scales (10) for display on the customer interface (22) of each of the remaining scales (10).

5. The system (100) of one of claims 2 to 4,
wherein:
- the controller (50) of the first scale (10, M1) is configured to (i) maintain a running list of queue numbers dispensed by the ticket dispense machine (102) and (ii) assign queue numbers from the running list among the scales (10) in a mutually exclusive manner such that, at any given time, each scale (10) has an assigned queue number that is different than that of any of the other scales (10).

6. The system (100) of claim5,
wherein:
- the controller (50) of the first scale (10, M1) is configured to (iii) update the assigned queue number for each of the remaining scales (10) based upon receipt of a next queue number request from the given scale (10).

7. The system (100) of claim 6,
wherein:
- the controller (50) of each of the remaining scales (10) controls the operator interface (18) of the remaining scale (10) to display a triggerable queue number request button that, when triggered by an operator, causes the controller (50) of the remaining scale (10) to send the next queue number request to the first scale (10, M1).

8. The system (100) of one of claims 2 to 7,
further comprising:
- a stand-alone display device (106), including a display screen (110), in the store department;
- wherein the controller (50) of the first scale (10, M1) is configured to communicate queue data to the stand-alone display device (106) for display on the display screen (110).

9. The system (100) of claim 8,
wherein the queue data communicated from the first scale (10, M1) to the stand-alone display device (106) includes a highest queue number assigned to one of the scales (10) and a current queue size.

10. The system (100) of claim 9,
wherein the queue data communicated from the first scale (10, M1) to the stand-alone device (106) includes an expected wait time in the queue.

11. The system (100) of one of claims 2 to 10,
wherein the ticket dispense machine (102) includes a display screen (114) and the controller (50) of the first scale (10, M1) is configured to communicate queue data to the ticket dispense machine (102) for display on the display screen (114), and the queue data communicated to the ticket dispense machine (102) includes a highest queue number assigned to one of the scales (10) and a current queue size.

12. The system (100) of one of claims 2 to 11, comprising:
- a first scale (10, M1) according to claim 1, the controller (50) of the first scale (10, M1) having its queuing mode enabled and its master queuing sub-mode enabled;
- a second scale (10, S1) according to claim 1, the controller (50) of the second scale (10, S1) having its queuing mode enabled and its slave queuing sub-mode enabled; and
- a third scale (10, S2) according to claim 1, the controller (50) of the third scale (10, S2) having its queuing mode enabled and its slave queuing sub-mode enabled.

13. A method of carrying out a scale (10)-based customer queuing system (100) in a perishable food department of a store that includes a plurality of scales (10) within the perishable food department, each of the scales (10) including a weigh station (102) for receiving items to be weighed, an operator interface (18) configured to display information associated with scale operations, a customer facing interface (22) for displaying information to customers and a controller (50) operatively coupled to the operator interface (18) to effect display of information thereon and to the customer interface (22) to effect display of information thereon, **characterized by**
- configuring one scale (10) of the plurality of scales (10) as a master queuing scale (10, M1);
- configuring remaining scales (10) of the plurality of scales (10) as slave queuing scales (10, S1, S2);
- the master queuing scale (10, M1) operating to maintain a running list of queue numbers provided to customers and assign queue numbers from the running list to itself and the slave queuing scales (10, S1, S2) according to queue number requests in a mutually exclusive manner such that, at any given time, the master queuing scale (10, M1) and the slave queuing scales (10, S1, S2) each have an assigned queue number that is different than that of an of the other scales (10);
- each of the master queuing scale (10, M1) and the slave queuing scales (10, S1, S2) operating to display its respective assigned queue number on its customer interface (22).

14. The method of claim13,
further comprising:
- the master queuing scale (10, M1) operating to provide queue numbers to a ticket dispense machine (102) and, upon dispense by the ticket dispense machine (102) of a ticket with a given queue number, to add the given queue number to the running list.

15. The method of claim 13 or 14,
further comprising:
- the master queuing scale (10, M1) operating to provide queue data to a stand-alone display device (106) in the perishable food department, wherein the queue data includes a highest queue number assigned to one of the scales (10) and a queue size; and
- the stand-alone display device (106) displaying both the highest queue number and the queue size.

## Patentansprüche

1. Wiege- und Preisauszeichnungswaage (10), die ausgelegt ist, um ein Kunden-Warteschlangensystem (100) zu ermöglichen, aufweisend:
- eine Wiegestation (12) zur Aufnahme von zu wiegenden Gegenständen, eine Bedienerschnittstelle (18) zur Anzeige von mit dem Waagenbetrieb verbundenen Informationen, eine kundenseitige Schnittstelle (22) zur Anzeige von Informationen für Kunden und eine Steuerung (50), die betriebsmäßig mit der Bedienerschnittstelle (18) zur Anzeige von Informationen auf dieser und mit der Kundenschnittstelle (22) zur Anzeige von Informationen auf dieser verbunden ist,
**dadurch gekennzeichnet, dass**
die Steuerung (50) mit einem aktivierbaren Kunden-Warteschlangen-Modus ausgebildet ist, wobei der aktivierbare Kunden-Warteschlangen-Modus sowohl einen Master-Warteschlangen-Untermodus als auch einen Slave-Warteschlangen-Untermodus beinhaltet und der Master-Warteschlangen-Untermodus und der Slave-Warteschlangen-Untermodus sich gegenseitig ausschließen, wobei:
- im Master-Warteschlangen-Untermodus die Steuerung (50) arbeitet, um (i) eine laufende Liste von Warteschlangennummern zu führen, die Kunden zur Verfügung gestellt wurden, (ii) Warteschlangennummern aus der laufenden Liste einer oder mehreren Vorrichtungen bei Empfang einer Warteschlangennummern-Anforderung von jeder der einen oder mehreren Vorrichtungen zuzuweisen und (iii) Warteschlangennummern aus der laufenden Liste sich selbst gemäß Warteschlangennummern-Anforderungen zuzuweisen, die über die Bedienerschnittstelle (18) erfolgt sind, und die Anzeige ihrer aktuell zugewiesenen Warteschlangennummer auf der Kundenschnittstelle (22) zu bewirken;
- im Slave-Warteschlangen-Untermodus die Steuerung (50) arbeitet, um Warteschlangennummern von einer anderen Vorrichtung anzufordern und deren aktuell zugewiesene Warteschlangennummer auf der Kundenschnittstelle (22) anzuzeigen.

2. Waagenbasiertes Kunden-Warteschlangensystem (100), aufweisend:
- eine Ticket-Ausgabemaschine (102) mit einer zugehörigen Steuerung;
- eine Vielzahl von Waagen (10) nach Anspruch 1 innerhalb einer Geschäftsabteilung,
wobei die Steuerung (50) einer ersten Waage (10) der Vielzahl von Waagen (10) ausgebildet ist, um die erste Waage (10) als Master-Warteschlangenwaage (M1) zu betreiben, die sowohl mit der Ticket-Ausgabemaschine (102) als auch mit den verbleibenden Waagen (10) der Vielzahl von Waagen (10) kommuniziert, um ein Kunden-Warteschlangensystem (100) durchzuführen.

3. System (100) nach Anspruch 2,
wobei:
- jede der Waagen (10) und die Ticket-Ausgabemaschine (102) mit einem Geschäftskommunikationsnetzwerk verbunden sind und die erste Waage (10, M1) mit den verbleibenden Waagen (10) und der Ticket-Ausgabemaschine (102) über das Geschäftskommunikationsnetzwerk kommuniziert.

4. System (100) nach Anspruch 2 oder 3,
wobei:
- die Steuerung (50) der ersten Waage (10, M1) ausgebildet ist, (i) Warteschlangennummern an die Ticket-Ausgabemaschine (102) zur Ausgabe zu senden und (ii) Warteschlangennummern an jede der verbleibenden Waagen (10) zur Anzeige auf der Kundenschnittstelle (22) jeder der verbleibenden Waagen (10) zu senden.

5. System (100) nach einem der Ansprüche 2 bis 4,
wobei:
- die Steuerung (50) der ersten Waage (10, M1) ausgebildet ist, um (i) eine laufende Liste von Warteschlangennummern zu führen, die von der Ticket-Ausgabemaschine (102) ausgegeben werden, und (ii) Warteschlangennummern aus der laufenden Liste unter den Waagen (10) in einer sich gegenseitig ausschließenden Weise zuzuweisen, sodass zu jedem gegebenen Zeitpunkt jede Waage (10) eine zugewiesene Warteschlangennummer hat, die sich von der einer der anderen Waagen (10) unterscheidet.

6. System (100) nach Anspruch 5,
wobei:
- die Steuerung (50) der ersten Waage (10, M1) ausgebildet ist, um (iii) die zugewiesene Warteschlangennummer für jede der verbleibenden Waagen (10) basierend auf dem Empfang einer nächsten Warteschlangennummer-Anforderung von der gegebenen Waage (10) zu aktualisieren.

7. System (100) nach Anspruch 6,
wobei:
- die Steuerung (50) jeder der verbleibenden Waagen (10) die Bedienerschnittstelle (18) der verbleibenden Waage (10) zur Anzeige einer auslösbaren Warteschlangennummern-Anforderungstaste regelt, die, wenn sie von einer Bedienperson ausgelöst wird, die Steuerung (50) der verbleibenden Waage (10) veranlasst, die nächste Warteschlangennummern-Anforderung an die erste Waage (10, M1) zu senden.

8. System (100) nach einem der Ansprüche 2 bis 7,
ferner Folgendes aufweisend:
- eine eigenständige Anzeigevorrichtung (106), einschließlich eines Anzeigebildschirms (110), in der Geschäftsabteilung;
- wobei die Steuerung (50) der ersten Waage (10, M1) ausgebildet ist, Warteschlangendaten an die eigenständige Anzeigevorrichtung (106) zur Anzeige auf dem Anzeigebildschirm (110) zu kommunizieren.

9. System (100) nach Anspruch 8,
wobei die Warteschlangendaten, die von der ersten Waage (10, M1) an die eigenständige Anzeigevorrichtung (106) kommuniziert werden, eine höchste Warteschlangennummer, die einer der Waagen (10) zugeordnet ist, und eine aktuelle Warteschlangengröße beinhalten.

10. System (100) nach Anspruch 9,
wobei die Warteschlangendaten, die von der ersten Waage (10, M1) an die autonome Vorrichtung (106) kommuniziert werden, eine erwartete Wartezeit in der Warteschlange beinhalten.

11. System (100) nach einem der Ansprüche 2 bis 10,
wobei die Ticket-Ausgabemaschine (102) einen Anzeigebildschirm (114) beinhaltet und die Steuerung (50) der ersten Waage (10, M1) ausgebildet ist, um Warteschlangendaten an die Ticket-Ausgabemaschine (102) zur Anzeige auf dem Anzeigebildschirm (114) zu kommunizieren, und die an die Ticket-Ausgabemaschine (102) kommunizierten Warteschlangendaten eine höchste Warteschlangennummer, die einer der Waagen (10) zugeordnet ist, und eine aktuelle Warteschlangengröße beinhalten.

12. System (100) nach einem der Ansprüche 2 bis 11, aufweisend:
- eine erste Waage (10, M1) nach Anspruch 1, wobei die Steuerung (50) der ersten Waage (10, M1) ihren Warteschlangenmodus aktiviert und ihren Master-Warteschlangen-Untermodus aktiviert hat;
- eine zweite Waage (10, S1) nach Anspruch 1, wobei die Steuerung (50) der zweiten Waage (10, S1) ihren Warteschlangenmodus aktiviert und ihren Slave-Warteschlangen-Untermodus aktiviert hat; und
- eine dritte Waage (10, S2) nach Anspruch 1, wobei die Steuerung (50) der dritten Waage (10, S2) ihren Warteschlangenmodus aktiviert hat und ihren Slave-Warteschlangen-Untermodus aktiviert hat.

13. Verfahren zum Durchführen eines auf einer Waage (10) basierenden Kundenwarteschlangensystems (100) in einer Abteilung für verderbliche Lebensmittel eines Geschäfts, das eine Vielzahl von Waagen (10) innerhalb der Abteilung für verderbliche Lebensmittel beinhaltet, wobei jede der Waagen (10) eine Wiegestation (102) zur Aufnahme von zu wiegenden Gegenständen beinhaltet, eine Bedienerschnittstelle (18), die ausgebildet ist, um mit dem Waagenbetrieb verbundene Informationen anzuzeigen, eine kundenseitige Schnittstelle (22) zur Anzeige von Informationen für Kunden und eine Steuerung (50), die betriebsmäßig mit der Bedienerschnittstelle (18) zum Bewirken der Anzeige von Informationen auf dieser und mit der Kundenschnittstelle (22) zum Bewirken der Anzeige von Informationen auf dieser gekoppelt ist, **gekennzeichnet durch**
- Ausbilden einer Waage (10) der Vielzahl von Waagen (10) als eine Master-Warteschlangenwaage (10, M1);
- Ausbilden der verbleibenden Waagen (10) der Vielzahl von Waagen (10) als Slave-Warteschlangenwaagen (10, S1, S2);
- wobei die Master-Warteschlangenwaage (10, M1) so arbeitet, dass sie eine laufende Liste von Warteschlangennummern führt, die Kunden zu Verfügung gestellt werden, und Warteschlangennummern aus der laufenden Liste sich selbst und den Slave-Warteschlangenwaagen (10, S1, S2) gemäß Warteschlangennummernanforderungen in einer sich gegenseitig ausschließenden Weise zuweist, sodass zu jedem gegebenen Zeitpunkt die Master-Warteschlangenwaage (10, M1) und die Slave-Warteschlangenwaagen (10, S1, S2) jeweils eine zugewiesene Warteschlangennummer haben, die sich von der einer der anderen Waagen (10) unterscheidet;
- wobei jede der Master-Warteschlangenwaagen (10, M1) und der Slave-Warteschlangenwaagen (10, S1, S2) so arbeitet, dass sie ihre jeweilige zugewiesene Warteschlangennummer auf ihrer Kundenschnittstelle (22) anzeigt.

14. Verfahren nach Anspruch 13,
ferner Folgendes aufweisend:
die Master-Warteschlangenwaage (10, M1), die so arbeitet, dass sie Warteschlangennummern an eine Ticket-Ausgabemaschine (102) bereitstellt und bei Ausgabe eines Tickets mit einer gegebenen Warteschlangennummer durch die Ticket-Ausgabemaschine (102) die gegebene Warteschlangennummer zu der laufenden Liste hinzufügt.

15. Verfahren nach Anspruch 13 oder 14,
ferner Folgendes aufweisend:
- die Master-Warteschlangenwaage (10, M1), die so arbeitet, dass sie Warteschlangendaten an eine eigenständige Anzeigevorrichtung (106) in der Abteilung für verderbliche Lebensmittel vorsieht, wobei die Warteschlangendaten eine höchste Warteschlangennummer, die einer der Waagen (10) zugeordnet ist, und eine Warteschlangengröße beinhalten; und
- die eigenständige Anzeigevorrichtung (106), die sowohl die höchste Warteschlangennummer als auch die Größe der Warteschlange anzeigt.

## Revendications

1. Balance de pesage et de tarification (10) adaptée pour permettre un système de mise en file d'attente de client (100), comprenant :
- un poste de pesage (12) pour la réception d'articles à peser, une interface opérateur (18) pour l'affichage d'informations associées aux opérations de balance, une interface faisant face au client (22) pour l'affichage d'informations aux clients et un dispositif de commande (50) couplé de manière opérationnelle à l'interface opérateur (18) pour effectuer un affichage d'informations sur celle-ci et à l'interface client (22) pour effectuer un affichage d'informations sur celle-ci,
**caractérisé en ce que**
le dispositif de commande (50) est configuré avec un mode de mise en file d'attente de client activable, où le mode de mise en file d'attente de client activable comprend à la fois un sous-mode de mise en file d'attente maître et un sous-mode de mise en file d'attente asservi et le sous-mode de mise en file d'attente maître et le sous-mode de mise en file d'attente asservi sont mutuellement exclusifs, dans lequel :
- dans le sous-mode de mise en file d'attente maître, le dispositif de commande (50) fonctionne pour (i) maintenir une liste en cours de numéros de file d'attente qui ont été fournis aux clients, (ii) attribuer des numéros de file d'attente à partir de la liste en cours à un ou plusieurs dispositifs lors de la réception d'une demande de numéro de file d'attente à partir de chacun du ou des dispositifs et (iii) attribuer des numéros de file d'attente à partir de la liste en cours à lui-même en fonction des demandes de numéros de file d'attente faites via l'interface opérateur (18) et effectuer l'affichage de son numéro de file d'attente actuellement attribué sur l'interface client (22) ;
- en sous-mode de mise en file d'attente asservi, le dispositif de commande (50) fonctionne pour demander des numéros de file d'attente à partir d'un autre dispositif et afficher son numéro de file d'attente actuellement attribué sur l'interface client (22).

2. Système de mise en file d'attente de client basé sur une balance (100), comprenant :
- une machine de distribution de tickets (102) avec un dispositif de commande associé ;
- une pluralité de balances (10) telles que définies dans la revendication 1 dans un département de magasin,
dans lequel le dispositif de commande (50) d'une première balance (10) de la pluralité de balances (10) est configuré pour faire fonctionner la première balance (10) en tant que balance de mise en file d'attente maîtresse (M1) qui communique à la fois avec la machine de distribution de tickets (102) et les balances restantes (10) de la pluralité de balances (10) pour mettre en œuvre un système de mise en file d'attente de client (100).

3. Système (100) selon la revendication 2,
dans lequel :
- chacune des balances (10) et la machine de distribution de tickets (102) sont connectées à un réseau de communication de magasin et la première balance (10, M1) communique avec les balances restantes (10) et la machine de distribution de tickets (102) sur le réseau de communication de magasin.

4. Système (100) selon la revendication 2 ou 3,
dans lequel :
- le dispositif de commande (50) de la première balance (10, M1) est configuré pour (i) envoyer des numéros de file d'attente à la machine de distribution de tickets (102) pour la distribution et (ii) envoyer des numéros de file d'attente à chacune des balances restantes (10) pour l'affichage sur l'interface client (22) de chacune des balances restantes (10).

5. Système (100) selon l'une quelconque des revendications 2 à 4,
dans lequel :
- le dispositif de commande (50) de la première balance (10, M1) est configuré pour (i) maintenir une liste en cours de numéros de file d'attente distribués par la machine de distribution de tickets (102) et (ii) attribuer des numéros de file d'attente à partir de la liste en cours parmi les balances (10) d'une manière mutuellement exclusive de sorte que, à tout moment donné, chaque balance (10) ait un numéro de file d'attente attribué qui est différent de celui de l'une quelconque des autres balances (10).

6. Système (100) selon la revendication 5,
dans lequel :
- le dispositif de commande (50) de la première balance (10, M1) est configuré pour (iii) mettre à jour le numéro de file d'attente attribué pour chacune des balances restantes (10) sur base de la réception d'une demande de numéro de file d'attente suivant de la balance donnée (10).

7. Système (100) selon la revendication 6,
dans lequel :
- le dispositif de commande (50) de chacune des balances restantes (10) commande l'interface opérateur (18) de la balance restante (10) pour afficher un bouton de demande de numéro de file d'attente déclenchable qui, lorsqu'il est déclenché par un opérateur, amène le dispositif de commande (50) de la balance restante (10) à envoyer la demande de numéro de file d'attente suivant à la première balance (10, M1).

8. Système (100) selon l'une quelconque des revendications 2 à 7,
comprenant en outre :
- un dispositif d'affichage autonome (106), comprenant un écran d'affichage (110), dans le département de magasin ;
- dans lequel le dispositif de commande (50) de la première balance (10, M1) est configuré pour communiquer des données de file d'attente au dispositif d'affichage autonome (106) pour un affichage sur l'écran d'affichage (110).

9. Système (100) selon la revendication 8,
dans lequel les données de file d'attente communiquées à partir de la première balance (10, M1) au dispositif d'affichage autonome (106) comprennent un numéro de file d'attente le plus élevé attribué à l'une des balances (10) et une taille de file d'attente actuelle.

10. Système (100) selon la revendication 9,
dans lequel les données de file d'attente communiquées à partir de la première balance (10, M1) au dispositif autonome (106) comprennent un temps d'attente attendu dans la file d'attente.

11. Système (100) selon l'une quelconque des revendications 2 à 10,
dans lequel la machine de distribution de tickets (102) comprend un écran d'affichage (114) et le dispositif de commande (50) de la première balance (10, M1) est configuré pour communiquer des données de file d'attente à la machine de distribution de tickets (102) pour un affichage sur l'écran d'affichage (114), et les données de file d'attente communiquées à la machine de distribution de tickets (102) comprennent un numéro de file d'attente le plus élevé attribué à l'une des balances (10) et une taille de file d'attente actuelle.

12. Système (100) selon l'une des revendications 2 à 11, comprenant :
- une première balance (10, M1) selon la revendication 1, le dispositif de commande (50) de la première balance (10, M1) ayant son mode de mise en file d'attente activé et son sous-mode de mise en file d'attente maître activé;
- une deuxième balance (10, S1) selon la revendication 1, le dispositif de commande (50) de la deuxième balance (10, S1) ayant son mode de mise en file d'attente activé et son sous-mode de mise en file d'attente asservi activé ; et
- une troisième balance (10, S2) selon la revendication 1, le dispositif de commande (50) de la troisième balance (10, S2) ayant son mode de mise en file d'attente activé et son sous-mode de mise en file d'attente asservi activé.

13. Procédé de mise en œuvre d'un système de mise en file d'attente de client (100) basé sur une balance (10) dans un département d'aliments périssables d'un magasin qui comprend une pluralité de balances (10) dans le département d'aliments périssables, chacune des balances (10) comprenant un poste de pesage (102) pour la réception des articles à peser, une interface opérateur (18) configurée pour afficher des informations associées aux opérations de balance, une interface faisant face au client (22) pour l'affichage d'informations aux clients et un dispositif de commande (50) couplé de manière opérationnelle à l'interface opérateur (18) pour effectuer un affichage d'informations sur celle-ci et à l'interface client (22) pour effectuer un affichage d'informations sur celle-ci, **caractérisé en ce que**
- la configuration d'une balance (10) de la pluralité de balances (10) en tant que balance de mise en file d'attente maîtresse (10, M1) ;
- la configuration des balances restantes (10) de la pluralité de balances (10) en tant que balances de mise en file d'attente asservies (10, S1, S2) ;
- la balance de mise en file d'attente maîtresse (10, M1) fonctionnant pour maintenir une liste en cours de numéros de file d'attente fournis aux clients et attribuer des numéros de file d'attente à partir de la liste en cours à elle-même et aux balances de mise en file d'attente asservies (10, S1, S2) en fonction des demandes de numéros de file d'attente d'une manière mutuellement exclusive de sorte que, à tout moment donné, la balance de mise en file d'attente maîtresse (10, M1) et les balances de mise en file d'attente asservies (10, S1, S2) ont chacune un numéro de file d'attente attribué qui est différent de celui des autres balances (10) ;
- chacune de la balance de mise en file d'attente maîtresse (10, M1) et des balances de mise en file d'attente asservies (10, S1, S2) fonctionnant pour afficher son numéro de file d'attente attribué respectif sur son interface client (22).

14. Procédé selon la revendication 13,
comprenant en outre :
- la balance de mise en file d'attente maîtresse (10, M1) fonctionnant pour fournir des numéros de file d'attente à une machine de distribution de tickets (102) et, lors de la distribution par la machine de distribution de tickets (102) d'un ticket avec un numéro de file d'attente donné, pour ajouter le numéro de file d'attente donné à la liste en cours.

15. Procédé selon la revendication 13 ou 14, comprenant en outre :
- la balance de mise en file d'attente maîtresse (10, M1) fonctionnant pour fournir des données de file d'attente à un dispositif d'affichage autonome (106) dans le département d'aliments périssables, dans lequel les données de file d'attente comprennent un numéro de file d'attente le plus élevé attribué à l'une des balances (10) et une taille de file d'attente ; et
- le dispositif d'affichage autonome (106) affichant à la fois le numéro de file d'attente le plus élevé et la taille de file d'attente.
